(19) Europäisches Patentamt
European Patent Office
Office européen des brevets

(11) **EP 1 849 668 B1**

(12) **EUROPÄISCHE PATENTSCHRIFT**

(45) Veröffentlichungstag und Bekanntmachung des Hinweises auf die Patenterteilung:
**23.09.2009 Patentblatt 2009/39**

(51) Int Cl.:
***B60T 7/22*** *(2006.01)*

(21) Anmeldenummer: 07104656.9

(22) Anmeldetag: **22.03.2007**

(54) **Bremsstrategie für Fahrzeuge mit manueller Schaltung**

Braking strategy for vehicles with manual transmission

Stratégie de freinage pour véhicules dotés d'un embrayage manuel

(84) Benannte Vertragsstaaten:
**DE FR SE**

(30) Priorität: **03.04.2006 DE 102006015487**
**27.07.2006 DE 102006034808**

(43) Veröffentlichungstag der Anmeldung:
**31.10.2007 Patentblatt 2007/44**

(73) Patentinhaber: **ROBERT BOSCH GMBH**
**70442 Stuttgart (DE)**

(72) Erfinder:
• **Kroeninger, Mario**
**77815, Buehl (DE)**
• **Stabrey, Stephan**
**70376, Stuttgart (DE)**

(56) Entgegenhaltungen:
**DE-A1- 10 220 566      DE-A1- 19 753 971**
**DE-A1-102004 055 399      DE-A1-102004 058 814**

**Beschreibung**

Stand der Technik

Fahrzeugführer werden heute bei der Bewältigung der Fahraufgabe durch eine Vielzahl von Assistenz- und Sicherheitssystemen unterstützt. Hierzu zählen Systeme wie AB S und ESP, ACC, Airbags und andere Rückhaltesysteme.
Mit Hilfe automatisch ausgelöster Bremsungen wird das Ziel verfolgt, eine Kollision zu vermeiden. Solche Systeme, wie eine automatische Notbremsung ANB, lösen die Bremsung in der Regel erst dann aus, wenn der Unfall unvermeidbar ist. Es kommt also auf jeden Fall zu einer Kollision, so dass der Zustand des Fahrzeugs nach dem Bremseingriff nebensächlich ist. Der Bremseingriff wird also unabhängig vom Zustand des Motors durchgeführt. In dem Dokument DE 10 2004 058814 A ist ein Gattungsbildendes Verfahren zur Steuerung der Bremsanlage offenbart.

Offenbarung der Erfindung

Die Erfindung betrifft ein Verfahren zum Abbruch einer automatischen Bremsung eines Fahrzeugs, wobei

- ermittelt wird, ob ein automatischer Bremsvorgang vorliegt
- bei Vorliegen eines automatischen Bremsvorgangs ermittelt wird, ob infolge der durch den Bremsvorgang sich einstellenden Fahrzeugbewegung die Unterschreitung eines vorgegebenen Schwellenwert durch die Motordrehzahl zu erwarten ist und
- bei zu erwartendem Unterschreiten des Schwellenwerts durch die Motordrehzahl die automatische Bremsung beendet oder abgeschwächt wird.

Damit wird verhindert, dass durch die automatische bzw. fahrerunabhängige Bremsung der Motor des Fahrzeugs abgewürgt wird und der Fahrer das Fahrzeug nicht mehr selbst aus der Gefahrenzone bewegen kann.
Eine vorteilhafte Ausgestaltung der Erfindung ist dadurch gekennzeichnet, dass

- ermittelt wird, ob bei sofortiger Beendigung des Bremsvorgangs infolge der sich dann einstellenden Fahrzeugbewegung die Unterschreitung eines vorgegebenen Schwellenwerts durch die Motordrehzahl zu erwarten wäre und
- bei zu erwartendem Unterschreiten des Schwellenwerts durch die Motordrehzahl die Beendigung oder Abschwächung der fahrerunabhängigen Bremsung verhindert wird und die fahrerunabhängige Bremsung aufrechterhalten wird.

Damit wird sichergestellt, dass für den Fall, das der Motor durch die Fahrzeugbewegung ohnehin abgewürgt wird, die Bremsung aufrechterhalten wird.
Eine vorteilhafte Ausgestaltung der Erfindung ist dadurch gekennzeichnet, dass die Motordrehzahl aus der Fahrzeuggeschwindigkeit ermittelt wird.
Eine vorteilhafte Ausgestaltung der Erfindung ist dadurch gekennzeichnet, dass in die Ermittlung der Motordrehzahl zusätzlich die eingelegte Gangstufe eingeht.
Eine vorteilhafte Ausgestaltung der Erfindung ist dadurch gekennzeichnet, dass in die Ermittlung der Motordrehzahl zusätzlich der Schwimmwinkel eingeht.
Eine vorteilhafte Ausgestaltung der Erfindung ist dadurch gekennzeichnet, dass die Motordrehzahl gemäß der Beziehung

$$n\_mot = \cos(\beta) * |v| * i / R$$

ermittelt wird, wobei i die von der Gangstufe abhängige Gesamtübersetzung vom Rad zum Motor ist, n_mot die Motordrehzahl ist, |v| der Betrag der Fahrzeuggeschwindigkeit ist und R der Radradius der Fahrzeugräder ist.
Eine vorteilhafte Ausgestaltung der Erfindung ist dadurch gekennzeichnet, dass es sich bei dem fahrerunabhängigen Bremsvorgang um einen fahrerunabhängigen Bremsvorgang nach einer erfolgten Kollision handelt.
Durch die Erfindung wird ermittelt, ob der Motor durch die Fahrzeugbewegung oder die automatische Bremsung abgewürgt wird. Die automatische Bremsung wird fortgesetzt, wenn der Motor aufgrund der Fahrzeugbewegung ohnehin abgewürgt wird und die automatische Bremsung wird beendet, wenn der Motor durch die Bremsung abgewürgt würde.
Der Vorteil der Erfindung besteht darin, dass bei Anwendung einer entsprechenden Bremsstrategie der Motor des Fahrzeugs nicht abgewürgt wird, wenn der Fahrer nach der automatischen Bremsung noch die Möglichkeit haben muss, dass Fahrzeug aus einer Gefahrenzone zu bewegen. Wird die Bremsung in einer Situation ausgelöst, in der der Motor aufgrund der Fahrzeugbewegung ohnehin abgewürgt wird, bleibt die Bremswirkung des Sicherheitssystems erhalten.

Weiter umfasst die Erfindung eine Vorrichtung, enthaltend Mittel zur Durchführung des erfindungsgemäßen Verfahrens.

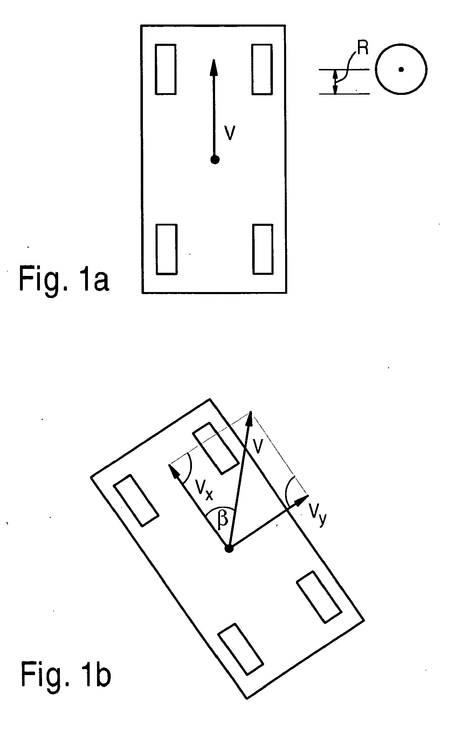

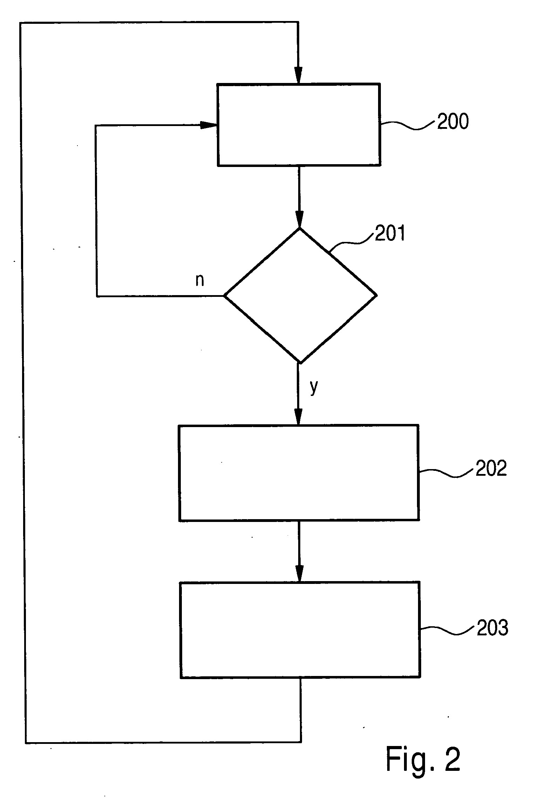

Die Zeichnung umfasst die Figuren 1 und 2.

Die Erfindung betrifft ein Verfahren zur Durchführung einer automatischen Bremsung eines Fahrzeugs. Der Kern der Erfindung besteht darin, dass ermittelt wird, ob der Motor durch die Fahrzeugbewegung oder die automatische Bremsung abgewürgt wird und die automatische Bremsung fortgesetzt wird, wenn der Motor aufgrund der Fahrzeugbewegung ohnehin abgewürgt wird und die automatische Bremsung beendet wird, wenn der Motor durch die Bremsung abgewürgt würde.

Soll eine Sicherheitsfunktion unfallvermeidend eingreifen, ist sicherzustellen, dass auch der Fahrer einen Beitrag zur Unfallvermeidung leisten kann. Hierzu zählt insbesondere, dass es ihm möglich sein muss, das Fahrzeug aus einer Gefahrenzone zu bewegen.

Eine automatische Bremsung zur Unfallvermeidung bzw. Unfallfolgenminderung, bei der das Fahrzeug nach einer erfolgten Kollision noch fahrbereit ist, muss daher so durchgeführt werden, dass der Motor des Fahrzeugs nicht abgewürgt wird.

Der Vorteil der Erfindung besteht darin, dass bei Anwendung einer entsprechenden Bremsstrategie der Motor des Fahrzeugs nicht abgewürgt wird, wenn der Fahrer nach der automatischen Bremsung noch die Möglichkeit haben muss, dass Fahrzeug aus einer Gefahrenzone zu bewegen. Wird die Bremsung in einer Situation ausgelöst, in der der Motor aufgrund der Fahrzeugbewegung ohnehin abgewürgt wird, bleibt die Bremswirkung des Sicherheitssystems erhalten.

Die erfindungsgemäße Bremsstrategie für eine Sicherheitsfunktion sieht vor, während einer aktiven Bremsung die Motordrehzahl eines Fahrzeugs mit manuellem Schaltgetriebe zu überwachen, und die Bremsung beim Unterschreiten einer Mindestdrehzahl ggf. zu beenden, um ein Abwürgen des Motors zu vermeiden.

Um durch die automatische Bremsung der Sicherheitsfunktion einen maximalen Nutzen zu erzielen, soll die Bremsung aufrechterhalten werden, wenn der Motor z.B. bei einem schleudernden Fahrzeug aufgrund der Fahrzeugbewegung ohnehin abgewürgt würde.

Dieser Zustand muss anhand von Fahrzeugbewegungsgrößen erkannt werden.

Abb. 1a) zeigt ein geradeaus fahrendes Fahrzeug. Zwischen der Fahrzeuggeschwindigkeit und der Motordrehzahl besteht ein einfacher Zusammenhang:

$$n\_mot = v/R * i, \text{ wobei } w * R = |v| \qquad (\text{Gl. 1 a}))$$

In diesem Fall muss die Bremsung beendet werden, wenn n_mot n_min zu unterschreiten droht.

Für ein quer rutschendes Fahrzeug (näherungsweise auch für schleuderndes Fahrzeug geltend) muss der Geschwindigkeitsvektor in seine Komponenten zerlegt werden. Die Winkelgeschwindigkeiten der Räder korrespondieren dann mit der Längsgeschwindigkeit v_x. Die Gefahr eines Abwürgens des Motors besteht also dann, wenn die unter Berücksichtigung des Schwimmwinkels berechnete Motordrehzahl (G1. 1b)) den Schwellenwert n_min zu unterschreiten droht. Es muss davon ausgegangen werden, dass der Motor aufgrund der Fahrzeugbewegung abgewürgt wird, wenn zu diesem Zeitpunkt der Schwimmwinkel betragsmäßig weiter zunimmt, somit die v_x-Komponente der Geschwindigkeit und damit auch die Motordrehzahl abnimmt und n_min dann unterschreitet:

$$n\_mot = \cos(\beta) * |v| * i / R \qquad (\text{Gl. 1b}))$$

$$v\_x = \cos(\beta) * |v|$$

In diesem Fall wird die automatische Bremsung durch die Sicherheitsfunktion fortgesetzt, da der Motor auch ohne den Bremseingriff abgewürgt würde. Es stellt sich somit durch den Eingriff der Sicherheitsfunktion keine Verschlechterung der Eingriffsmöglichkeiten des Fahrers ein.

In der Beschreibung und in Fig. 1 werden die folgenden Abkürzungen verwendet:

i: von der Gangstufe abhänge Gesamtübersetzung vom Rad zum Motor
n_mot: Motordrehzahl

w: Winkelgeschwindigkeit des Rades

β: Schwimmwinkel

n_min: Mindestdrehzahl zur Vermeidung des Abwürgens des Motors

|v|: Fahrzeuggeschwindigkeit

Der Ablauf des erfindungsgemäßen Verfahrens ist in Fig. 2 dargestellt.

Nach dem Start des Verfahrens in Block 200 wird in Block 201 abgefragt, ob ein fahrerunabhängiger Bremsvorgang vorliegt. Ist dies der Fall, d.h. die Abfrage wird mit "ja" (in Fig. 2 mit "y" gekennzeichnet) beantwortet, wird zu Block 202 weitergegangen. Ist dies nicht der Fall, d.h. die Abfrage 201 wird mit "nein" (in Fig. 2 mit "n" gekennzeichnet) beantwortet, wird zu Block 200 zurückgegangen. In Block 202 wird

- ermittelt, ob infolge der durch den Bremsvorgang sich einstellenden Fahrzeugbewegung die Unterschreitung eines vorgegebenen Schwellenwert durch die Motordrehzahl zu erwarten ist und
- bei zu erwartendem Unterschreiten des Schwellenwerts durch die Motordrehzahl wird die fahrerunabhängige Bremsung beendet oder abgeschwächt. Zusätzlich kann in Block 202 optional ermittelt werden, ob bei sofortiger Beendigung des Bremsvorgangs infolge der sich dann einstellenden Fahrzeugbewegung die Unterschreitung eines vorgegebenen Schwellenwert durch die Motordrehzahl zu erwarten wäre und bei zu erwartendem Unterschreiten des Schwellenwerts durch die Motordrehzahl wird die fahrerunabhängige Bremsung aufrechterhalten.

In Block 203 endet das Verfahren und wird optional in Block 200 fortgesetzt.

## Patentansprüche

1. Verfahren zum Abbruch einer fahrerunabhängigen Bremsung eines Fahrzeugs, **dadurch gekennzeichnet, dass**

   - ermittelt wird, ob ein fahrerunabhängiger Bremsvorgang vorliegt (201)
   - bei Vorliegen eines fahrerunabhängigen Bremsvorgangs ermittelt wird, ob infolge der durch den Bremsvorgang sich einstellenden Fahrzeugbewegung die Unterschreitung eines vorgegebenen Schwellenwerts durch die Motordrehzahl (n_mot) zu erwarten ist und
   - bei zu erwartendem Unterschreiten des Schwellenwerts durch die Motordrehzahl (n_mot) die fahrerunabhängige Bremsung beendet oder abgeschwächt wird (202).

2. Verfahren nach Anspruch 1, **dadurch gekennzeichnet,**

   - **dass** ermittelt wird, ob bei sofortiger Beendigung des Bremsvorgangs infolge der sich dann einstellenden Fahrzeugbewegung die Unterschreitung eines vorgegebenen Schwellenwerts durch die Motordrehzahl (n_mot) zu erwarten wäre und
   - bei zu erwartendem Unterschreiten des Schwellenwerts durch die Motordrehzahl (n_mot) die Beendigung oder Abschwächung der fahrerunabhängigen Bremsung verhindert wird und die fahrerunabhängige Bremsung aufrechterhalten wird.

3. Verfahren nach Anspruch 1, **dadurch gekennzeichnet, dass** die Motordrehzahl (n_mot) aus der Fahrzeuggeschwindigkeit (v) ermittelt wird.

4. Verfahren nach Anspruch 3, **dadurch gekennzeichnet, dass** in die Ermittlung der Motordrehzahl (n_mot) zusätzlich die eingelegte Gangstufe (i) eingeht.

5. Verfahren nach Anspruch 4, **dadurch gekennzeichnet, dass** in die Ermittlung der Motordrehzahl (n_mot) zusätzlich der Schwimmwinkel (β) eingeht.

6. Verfahren nach Anspruch 5, **dadurch gekennzeichnet, dass** die Motordrehzahl gemäß der Beziehung

$$n\_mot = \cos(\beta) * |v| * i / R$$

ermittelt wird, wobei i die von der Gangstufe abhängige Gesamtübersetzung vom Rad zum Motor ist, n_mot die Motordrehzahl ist , |v| der Betrag der Fahrzeuggeschwindigkeit ist und R der Radradius der Fahrzeugräder ist.

7. Verfahren nach Anspruch 1, **dadurch gekennzeichnet, dass** es sich bei dem fahrerunabhängigen Bremsvorgang um einen fahrerunabhängigen Bremsvorgang nach einer erfolgten Kollision handelt.

8. Vorrichtung, enthaltend Mittel die das Verfahren nach einem der vorstehenden Ansprüche, verwenden.

**Claims**

1. Method for aborting driver-independent braking of a vehicle, **characterized in that**

   - it is determined whether a driver-independent braking process is occurring (201),
   - if a driver-independent braking process is occurring, it is determined whether it is to be expected, on the basis of the vehicle movement which occurs as a result of the braking process, that the engine speed (n_mot) will drop below a predefined threshold value, and
   - if the engine speed (n_mot) is expected to drop below the threshold value, the driver-independent braking operation is terminated or attenuated (202).

2. Method according to Claim 1, **characterized**

   - **in that** it is determined whether, given immediate termination of the braking process owing to the vehicle movement which then occurs, the engine speed (n_mot) would be expected to drop below a predefined threshold value, and
   - if the engine speed (n_mot) is expected to drop below the threshold value, the termination or attenuation of the driver-independent braking operation is prevented, and the driver-independent braking operation is maintained.

3. Method according to Claim 1, **characterized in that** the engine speed (n_mot) is determined from the velocity (v) of the vehicle.

4. Method according to Claim 3, **characterized in that** the selected gear speed (i) is additionally included in the determination of the engine speed (n_mot).

5. Method according to Claim 4, **characterized in that** the attitude angle (β) is additionally included in the determination of the engine speed (n_mot).

6. Method according to Claim 5, **characterized in that** the engine speed is determined in accordance with the relationship

$$n\_mot = cos(\beta) * |v| * i/R$$

   where i is the overall transmission ratio, dependant on the gear speed, from the wheel to the engine, n_mot is the engine speed, |v| is the absolute value of the velocity of the vehicle, and R is the wheel radius of the vehicle wheels.

7. Method according to Claim 1, **characterized in that** the driver-independent braking operation is a driver-independent braking operation after a collision has taken place.

8. Device containing means which use the method according to one of the preceding claims.

**Revendications**

1. Procédé d'interruption d'un freinage indépendant du conducteur d'un véhicule, **caractérisé en ce que**

   - on détermine si une opération de freinage indépendante du conducteur est en cours (201),
   - si une opération de freinage indépendante du conducteur est en cours, on détermine si suite au déplacement du véhicule qui s'établit en raison de l'opération de freinage, il faut s'attendre à ce qu'une valeur de seuil prédéterminée du régime de rotation du moteur (n_mot) ne soit plus atteinte et
- **en ce que** le freinage indépendant du véhicule est arrêté ou atténué (202) s'il faut s'attendre à ce que la valeur de seuil du régime de rotation du moteur (n_mot) ne soit plus atteinte.

2. Procédé selon la revendication 1, **caractérisé en ce que**

- on détermine si en cas d'arrêt immédiat de l'opération de freinage, suite au déplacement du véhicule qui s'établit à ce moment, il faut s'attendre à ce qu'une valeur de seuil prédéterminée du régime de rotation du moteur (n_mot) ne soit plus atteinte et
- **en ce que** l'arrêt ou l'atténuation du freinage indépendant du véhicule sont empêchés et le freinage indépendant du véhicule est maintenu s'il faut s'attendre à ce que la valeur de seuil du régime de rotation du moteur (n_mot) ne soit plus atteinte.

3. Procédé selon la revendication 1, **caractérisé en ce que** le régime de rotation du moteur (n_mot) est déterminé à partir de la vitesse (v) du véhicule.

4. Procédé selon la revendication 3, **caractérisé en ce que** le rapport de transmission (i) engagé intervient dans la détermination du régime de rotation du moteur (n_mot).

5. Procédé selon la revendication 4, **caractérisé en ce que** l'angle de glissement (β) intervient de plus dans la détermination du régime de rotation du moteur (n_mot).

6. Procédé selon la revendication 5, **caractérisé en ce que** le régime de rotation du moteur est déterminé par l'équation :

$$\text{n\_mot} = \cos(\beta) * |v| * i/R$$

dans laquelle i est le rapport global de transmission entre les roues et le moteur en fonction du rapport de transmission, n_mot est le régime de rotation du moteur, |v| est la valeur de la vitesse du véhicule et R est le rayon des roues du véhicule.

7. Procédé selon la revendication 1, **caractérisé en ce que** l'opération de freinage indépendante du conducteur est une opération de freinage indépendante du conducteur qui suit une collision.

8. Dispositif contenant des moyens qui utilisent le procédé selon l'une des revendications précédentes.

Fig. 1a

Fig. 1b

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004058814 A